# EUROPÄISCHE PATENTSCHRIFT

(11) **EP 1 036 978 B1**
(45) Veröffentlichungstag und Bekanntmachung des Hinweises auf die Patenterteilung: **05.10.2005**
(21) Anmeldenummer: 00103231.7
(22) Anmeldetag: 17.02.2000
(51) Int. Cl.: F16P 3/12, E05F 15/00

(54) **Schliesskantensicherung**
Safety door-edge device
Dispositif de sécurité pour arête de porte

(30) Priorität: 17.03.1999 DE 19911768
(43) Veröffentlichungstag der Anmeldung: 20.09.2000
(73) Patentinhaber: Beckhausen, Karlheinz, 50931 Köln (DE)
(72) Erfinder: Beckhausen, Karl-Heinz, 50931 Köln (DE); Menz, Jürgen, 50858 Köln (DE)
(74) Vertreter: Nau, Walter

(56) Entgegenhaltungen:
- EP-A- 0 353 332
- EP-A- 0 405 351
- EP-A- 0 638 701
- DE-U- 8 805 557
- GB-A- 2 301 622
- US-A- 5 157 230

## Beschreibung

Die Erfindung bezieht sich auf eine Sicherheitsschaltleiste für kraftbetätigte Anlagen, wie Rolltore, Rollgitter usw. und Hebe-, Arbeitsbühnen und dergleichen sowie für kraftbetätigte Türen, Schiebeanlagen usw. von Kraftfahrzeugen nach dem Oberbegriff des geltenden Patentanspruchs 1.

In einer gattungsgemäßen Schaltleiste (EP- 0 353 332 A1) ist der Innenkörper und das damit zusammenwirkende Mantelteil elektrisch leitend ausgebildet, wobei die Leitfähigkeit durch Beimischen von leitfähigen Stoffen, wie Ruß, Graphit, Metallpulver und dergleichen erfolgt. In dieser Ausführungsform werden die Bauteile selbst, also der Innenkörper und das Mantelteil als elektrisch leitende Zonen ausgebildet. Dabei sind sowohl im Innenkörper als auch im Mantelteil oder im Befestigungsprofil elektrisch leitende, nicht isolierte Drähte zur Erhöhung der Leitfähigkeit eingebaut. Bei dem Befestigungsprofil handelt es sich um eine Befestigungsleiste, die seitliche Hinterschneidungsnuten aufweist und damit in ein Halteprofil eingeschoben werden kann. Aussagen über das Halteprofil, aus welchem Werkstoff es besteht, ob es leitend ist und wie es mit den kraftbetätigten Anlagen verbunden wird, sind diesem Dokument nicht zu entnehmen.

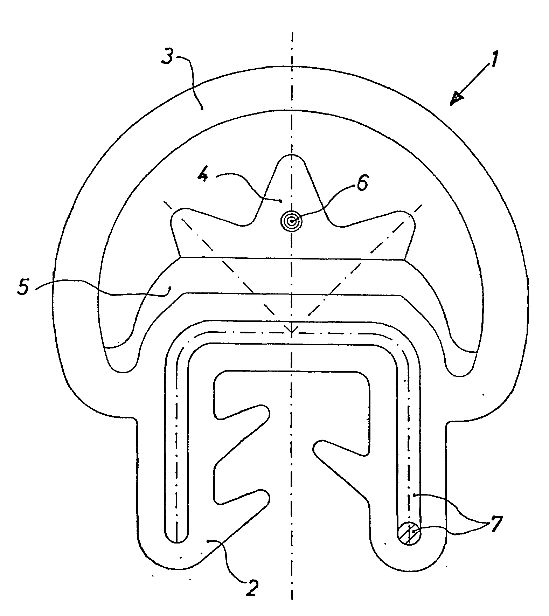

Eine ähnlich aufgebaute Sicherheitsschaltleiste ist aus der DE-U-88 05 557 bekannt. Auch das dort beschriebene Profil, insbesondere gemäß Figur 1, weist einen Innenkörper mit einem darin angeordneten nicht isolierten elektrisch leitenden Draht auf und ein Mantelteil, das elektrisch leitend ausgeführt ist und elektrisch leitend mit einer Befestigungsleiste verbunden ist, die Hinterschneidungsnuten zur Befestigung in einem Profil aufweist. Dieses Befestigungsprofil kann aus Metall hergestellt, also leitend sein und damit die Leitfähigkeit der Befestigungsleiste erhöhen. Wie dieses Befestigungsprofil an der kraftbetätigten Anlage befestigt sein soll, ist diesem Dokument nicht zu entnehmen.

Aufgabe der Erfindung ist es, eine gattungsbildende Sicherheitsschaltleiste so zu verbessern, dass sie mit einfachen Mitteln an die Endbereiche kraftbetätigter Anlagen bzw. kraftbetätigter Türen und dergleichen anschließbar ist. Dabei soll die Sicherheitsschaltleiste auch so ausgebildet sein, dass sie für den Kraftfahrzeugbereich geeignet und bezüglich äußerer elektrischer Einflüsse unempfindlich ist.

Gelöst wird die Aufgabe der Erfindung dadurch, dass das Befestigungsprofil als Halteprofil ausgebildet ist, durch das der Endbereich der kraftbetätigten Anlage umschließbar ist, und Federklammem aufweist, die als gekröpfter und klammerartig geformter Draht einstückig ausgebildet sind und dass der Draht sowohl als elektrischer Leiter als auch gleichzeitig als Federklammern ausgeführt ist. Der Draht übernimmt sowohl die elektrische Leiterfunktion entlang des Befestigungsprofils als auch gleichzeitig die Klammerfunktion. Die Sicherheitsschaltleiste kann so auf den Endbereich, insbesondere den Rand einer Tür, Schiebeanlage oder dergleichen aufgedrückt werden und dort befestigt sein.
In weiterer Ausgestaltung der Erfindung ist der Endbereich des Rolltores, Rollgitters und dergleichen oder der Fahrzeugtür bzw. der Fahrzeugschiebeanlage als elektrischer Leiter ausgebildet und das Befestigungsprofil ist leitend damit verbindbar. Durch diese Ausgestaltung des Befestigungsprofils ist dieses bzw. die Sicherheitsschaltleiste nicht mehr als elektrischer Fremdkörper zu den kraftbetätigten Anlagen oder Türen usw. zu sehen, sondern bilden dadurch mit diesen eine elektrische Einheit.

Der Innenkörper kann in vorteilhafter Weise mehrere wulst- und leistenartige Vorsprünge aufweisen, die zum Mantelteil hin ausgerichtet sind und vorzugsweise im Inneren einen Leiterdraht beinhalten. Dadurch können verschiedenartige Krafteinwirkungen auf den Mantelteil eine Kontaktgabe zu dem Innenkörper ermöglichen. Durch den Leiterdraht und den elektrischen Leiter bzw. den Draht im Befestigungsprofil kann auch in vorteilhafter Weise eine elektrische Verbindung zu der Auswerteeinheit geschaffen werden, wobei an den

Leiterdraht und das Befestigungsprofil bzw. den dort eingelagerten Draht oder das Profil die Auswerteeinheit über Kabel angeschlossen wird.

Zwischen dem Innenkörper und dem Befestigungsprofil ist in vorteilhafter Weise eine nicht leitende Zwischenschicht vorgesehen, die seitlich bis zum Übergang vom Befestigungsprofil zum Mantelteil reicht. Dadurch entsteht auch seitlich ein Sicherheitsabstand zwischen dem Innenkörper und dem Mantelteil, so daß unbeabsichtigte kleine seitliche Verformungen keinen Impuls auslösen.

Dadurch, dass das Befestigungsprofil und das Mantelteil elektrisch leitend und miteinander leitend verbunden sind, entsteht ein Faraday-Käfig, so dass auch elektrostatische Aufladungen, die im Fahrzeugbereich sehr häufig vorkommen, keine Impulse der Sicherheitsschaltleiste auslösen.

Zur weiteren Erläuterung der Erfindung wird auch die Zeichnung verwiesen, in der ein Ausführungsbeispiel der Erfindung vereinfacht dargestellt ist.

Die Figur zeigt einen Querschnitt durch eine erfindungsgemäße Sicherheitsschaltleiste.

Die Sicherheitsschaltleiste ist allgemein mit 1 bezeichnet. Sie weist ein Befestigungsprofil 2 auf, an dem sich ein Mantelteil 3 anschließt, in dem ein Innenkörper 4 angeordnet ist. Zwischen dem Innenkörper 4 und dem Befestigungsprofil 2 bzw. dem Mantelteil 3 ist eine Zwischenschicht 5 vorgesehen, die elektrisch nicht leitend ist. Die übrigen Teile, nämlich das Befestigungsprofil, das Mantelteil und der Innenkörper sind durch Beimischungen von Ruß, Graphit, Metallpulver oder dergleichen elektrisch leitend ausgeführt. Der Innenkörper 4 weist drei wulstartige als Leisten ausgebildete Vorsprünge auf, wobei im mittleren Vorsprung ein Leiterdraht 6 eingearbeitet ist, der als Kupferlitze ausgeführt und unisoliert im Innenkörper eingelassen ist. Im Befestigungsprofil 2 ist ein mit 7 bezeichneter, ebenfalls nicht isolierter, Draht eingelassen, der gekröpft ausgebildet und klammerartig geformt ist, so daß er zusätzlich zu der elektrischen Leitung auch eine Federklammerfunktion derart erfüllt, daß das Befestigungsprofil auf einen Rand einer Tür oder dergleichen aufklemmbar ist. Der Draht 7 ist vorzugsweise aus nicht rostendem Material, wie V2A (Edelstahl CrNi) oder V4A (Edelstahl CrNiMo) hergestellt. Am Ende des Drahtes 7 und des Leiterdrahtes 6 ist nicht dargestellt ein Kabel angeschlossen, das zu der Auswerteeinheit führt.

## Patentansprüche

1. Sicherheitsschaltleiste (1) für kraftbetätigte Anlagen, wie Rolltore, Rollgitter usw. und Hebe-, Arbeitsbühnen und dergleichen sowie für kraftbetätigte Türen, Schiebeanlagen usw. von Kraftfahrzeugen mit einem ein Befestigungsprofil (2) und ein Mantelteil (3) aufweisenden Hohlprofil aus elastomerem Material, in dem zumindest ein Innenkörper (4) vorgesehen ist, wobei der Innenkörper (4) und das Mantelteil (3) elektrisch leitende Zonen aufweisen, die bei gegenseitiger Berührung einen einer Auswerteeinheit zuführbaren Schaltimpuls auslösen, und wobei das Befestigungsprofil (2) elektrisch leitend ausgebildet und mit dem Innenkörper (4) oder dem Mantelteil (3) elektrisch leitend verbunden ist und im oder am Befestigungsprofil (2) ein elektrisch leitender, nicht isolierter Draht (7), Profil oder dergleichen angeordnet ist,
**dadurch gekennzeichnet, dass** das Befestigungsprofil (2) als Halteprofil ausgebildet ist, durch das der Endbereich der kraftbetätigten Anlage umschließbar ist, und Federklammern aufweist, die als gekröpfter und klammerartig geformter Draht (7) einstückig ausgebildet sind und dass der Draht (7) sowohl als elektrischer Leiter als auch als Federklammern ausgeführt ist.

2. Sicherheitsschaltleiste nach Anspruch 1,
**dadurch gekennzeichnet, dass** das Befestigungsprofil (2) elektrisch leitend mit dem Endbereich des Rolltores, Rollgitters und dergleichen oder der Fahrzeugtür oder -schiebeanlage Verbindbar ist.

3. Sicherheitsschaltleiste nach einem der Ansprüche 1 oder 2,
**dadurch gekennzeichnet, dass** der Innenkörper (4) mehrere wulst- und leistenartige Vorsprünge aufweist, die zum Mantelteil (3) hin ausgerichtet sind und vorzugsweise einen Leiterdraht (6) beinhalten.

4. Sicherheitsschaltleiste nach einem der vorhergehenden Ansprüche,
**dadurch gekennzeichnet, dass** zwischen dem Innenkörper (4) und dem Befestigungsprofil (2) eine nicht leitende Zwischenschicht (5) vorgesehen ist, die seitlich bis zum Übergang vom Befestigungsprofil (2) zum Mantelteil (3) reicht, und dass das Befestigungsprofil (2) und das Mantelteil (3) durch Beimischung leitender Stoffe, wie Ruß, Graphit, Metallpulver oder dergleichen leitend ausgeführt und miteinander leitend verbunden sind.

5. Sicherheitsschaltleiste nach einem der vorhergehenden Ansprüche,
**dadurch gekennzeichnet, dass** die Sicherheitsschaltleiste (1) einstückig hergestellt, insbesondere mit dem Draht (7) und dem Leiterdraht (6) extrudiert oder eingedüst ist.

## Claims

1. Safety connector strip (1) for power-operated systems, such as rolling gates, rolling railings etc. and lifting platforms, working platforms or the like and for power-operated doors, sliding systems etc. of motor vehicles having a hollow profile which is made from elastomeric material and has a fixing profile (2) and a casing part (3) and in which at least one inner body (4) is provided, the inner body (4) and the casing part (3) having electrically conductive zones which trigger a switching pulse which can be fed to an evaluation unit in the event of mutual touching contact, and the fixing profile (2) being designed to be electrically conductive and being electrically conductively connected to the inner body (4) or the casing part (3), and an electrically conductive, non-insulating wire (7), profile or the like being arranged in or on the fixing profile (2), **characterized in that** the fixing profile (2) is in the form of a retaining profile, by means of which the end region of the power-operated system can be surrounded, and has spring clips which are of integral design as a bent-back and clip-like wire (7), and **in that** the wire (7) is both in the form of an electrical conductor and in the form of spring clips.

2. Safety connector strip according to Claim 1, **characterized in that** the fixing profile (2) can be electrically conductively connected to the end region of the rolling gate, rolling railing or the like or of the vehicle door or vehicle sliding system.

3. Safety connector strip according to either of Claims 1 and 2, **characterized in that** the inner body (4) has two or more bead-like or strip-like projections which are oriented towards the casing part (3) and preferably contain a conductor wire (6).

4. Safety connector strip according to one of the preceding claims, **characterized in that** a nonconductive intermediate layer (5), which reaches laterally up to the transition from the fixing profile (2) to the casing part (3), is provided between the inner body (4) and the fixing profile (2), and **in that** the fixing profile (2) and the casing part (3) are designed to be conductive by admixing conductive substances, such as carbon black, graphite, metal powder or the like, and are conductively connected to one another.

5. Safety connector strip according to one of the preceding claims, **characterized in that** the safety connector strip (1) is produced to be integral, in particular is extruded or injection moulded with the wire (7) and the conductor wire (6).

## Revendications

1. Barrette de commutation de sécurité (1) pour installations motorisées telles que des portes à rouleau, des grilles à rouleau etc., et des plates-formes de levage, de travail et similaires ainsi que pour des portes motorisées, des installations coulissantes etc. de véhicules automobiles, comprenant un profilé creux en matériau élastomère présentant un profilé de fixation (2) et une partie d'enveloppe (3), dans lequel au moins un corps interne (4) est prévu, le corps interne (4) et la partie d'enveloppe (3) présentant des zones électriquement conductrices qui, en cas de contact mutuel, déclenchent une impulsion de commutation pouvant être acheminée à une unité d'analyse, et le profilé de fixation (2) étant réalisé de manière électriquement conductrice et étant connecté de manière électriquement conductrice au corps interne (4) ou à la partie d'enveloppe (3) et un fil (7), profil ou similaire non isolé, électriquement conducteur, étant disposé dans ou sur le profilé de fixation (2),
**caractérisée en ce que**
le profilé de fixation (2) est réalisé sous forme de profilé de retenue, lequel peut entourer la région d'extrémité de l'installation motorisée, et présente des pinces à ressort qui sont réalisées d'une pièce sous forme de fil (7) coudé et en forme de pince, et **en ce que** le fil (7) est réalisé à la fois sous forme de conducteur électrique et sous forme de pinces à ressort.

2. Barrette de commutation de sécurité selon la revendication 1,
**caractérisée en ce que** le profilé de fixation (2) peut être connecté de manière électriquement conductrice à la région d'extrémité de la porte à rouleau, de la grille à rouleau et similaire ou de la porte de véhicule ou de l'installation coulissante de véhicule.

3. Barrette de commutation de sécurité selon l'une quelconque des revendications 1 ou 2,
**caractérisée en ce que** le corps interne (4) présente plusieurs saillies de type bourrelets et de type barrettes, qui sont orientées vers la partie d'enveloppe (3) et qui contiennent de préférence un fil conducteur (6).

4. Barrette de commutation de sécurité selon l'une quelconque des revendications précédentes,
**caractérisée en ce que** l'on prévoit entre le corps interne (4) et le profilé de fixation (2) une couche intermédiaire non conductrice (5), qui s'étend latéralement jusqu'à la transition du profilé de fixation (2) à la partie d'enveloppe (3), et **en ce que** le profilé de fixation (2) et la partie d'enveloppe (3) sont réalisés de manière conductrice par un mélange de substances conductrices, comme de la suie, du graphite, de la poudre métallique ou similaires, et sont connectés l'un à l'autre de manière conductrice.

5. Barrette de commutation de sécurité selon l'une quelconque des revendications précédentes,
**caractérisée en ce que** la barrette de commutation de sécurité (1) est fabriquée d'une seule pièce, notamment est extrudée ou pulvérisée avec le fil (7) et le fil conducteur (6).
